# FASCICULE DE BREVET EUROPEEN

(11) **EP 3 482 179 B1**
(45) Date de publication et mention de la délivrance du brevet: **22.01.2020**
(21) Numéro de dépôt: 17734771.3
(22) Date de dépôt: 06.07.2017
(51) Int. Cl.: G01K 7/36, G01K 7/42, F03H 1/00

(54) **PROCÉDÉ DE RÉGULATION DE LA TEMPÉRATURE D'UN PROPULSEUR ÉLECTRIQUE**
VERFAHREN ZUR STEUERUNG DER TEMPERATUR EINES ELEKTRISCHEN ANTRIEBSSYSTEMS
METHOD FOR CONTROLLING THE TEMPERATURE OF AN ELECTRIC PROPULSION SYSTEM

(30) Priorité: 07.07.2016 FR 1656529
(43) Date de publication de la demande: 15.05.2019
(73) Titulaire: Airbus Defence and Space SAS, 31402 Toulouse Cedex 4 (FR)
(72) Inventeur: WARTELSKI, Matias, 31402 TOULOUSE CEDEX 4 (FR); SEMBÉLY, Xavier, 31402 TOULOUSE CEDEX 4 (FR)
(74) Mandataire: Ipside
(86) Numéro de dépôt international: PCT/EP2017/066972
(87) Numéro de publication internationale: WO 2018/007540

(56) Documents cités:
- WO-A1-2011/135271
- CN-A- 103 471 738
- FR-A1- 2 973 081

## Description

### Domaine de l'invention

La présente invention appartient au domaine de la propulsion spatiale. Plus particulièrement, la présente invention concerne un propulseur électrique.

La présente invention porte sur un procédé de régulation de la température du propulseur électrique.

### Etat de la technique

Dans le domaine de la propulsion spatiale, les propulseurs électriques sont de plus en plus utilisés, notamment pour la commande d'orientation et orbite d'engins spatiaux, plus spécifiquement de satellites. En effet, les différents types de propulseurs électriques disponibles offrent une impulsion spécifique généralement plus élevée que les propulseurs chimiques, permettant de réduire la consommation de fluide propulseur pour les mêmes manœuvres, avec en conséquence une augmentation de la durée de vie et/ou de la charge utile des satellites.

Parmi les différents types de propulseurs électriques, il existe notamment ceux dits électrostatiques, dans lesquels le fluide propulseur est ionisé et directement accéléré par un champ électrique. Les propulseurs dits à effet Hall appartiennent à cette catégorie.

Les propulseurs électriques sont soumis à des conditions thermiques extrêmes, que ce soit lorsqu'ils sont en fonctionnement (les températures atteignent au moins 300°C pour les parties les moins chaudes) ou lorsqu'ils sont à l'arrêt (les propulseurs électriques étant positionnés sur une face externe des satellites, ils sont en contact direct avec l'espace froid).

Un propulseur électrique étant généralement qualifié pour une plage de températures donnée, en dehors de cette plage de températures, il peut y avoir une dégradation de celui-ci. Il s'avère donc important de contrôler la température du propulseur électrique.

Actuellement, les équipements de mesure, du type thermistance ou thermocouple, et les équipements de réchauffage du propulseur électrique, qui supportent de telles températures extrêmes sont peu nombreux, complexes à mettre en œuvre, encombrants, lourds et très onéreux.

Les solutions existantes consistent à positionner des capteurs de température, tels que des thermistances ou des thermocouples, et un équipement de réchauffage du propulseur électrique sur une structure de support liant le propulseur électrique à la structure du satellite.

Ces solutions présentent néanmoins de nombreux inconvénients.

D'une part, les capteurs de température et équipement de réchauffage du propulseur électrique ne sont pas assemblés directement audit propulseur électrique, mais via une structure de support qui présente des propriétés d'isolation thermique. La mesure de la température est donc réalisée de manière très indirecte, la température relevée par les capteurs de température n'est par conséquent pas représentative des températures dans l'enceinte du propulseur électrique.

D'autre part, la température précise dans l'enceinte du propulseur électrique n'étant pas connue, l'équipement de réchauffage du propulseur électrique est surdimensionné, notamment pour garantir le maintien du propulseur électrique à une température suffisamment chaude, lorsqu'il n'est pas en fonctionnement. Un tel équipement de réchauffage du propulseur électrique est donc très consommateur en énergie.

Le document CN103471738 décrit un système de surveillance de la température d'un propulseur électrique.

### Exposé de l'invention

La présente invention a pour objectif de remédier à tout ou partie des limitations des solutions de l'art antérieur, notamment à celles exposées ci-avant, en proposant une solution simple et économique qui permet la régulation de la température d'un propulseur électrique, sans recourir à des équipements de réchauffage externes.

A cet effet, l'invention concerne un procédé de régulation en température d'un propulseur électrique, ledit propulseur électrique comportant un canal de décharge, une anode, une cathode, un système d'injection de gaz propulsif dans le canal de décharge, et un circuit magnétique, comportant au moins un bobinage magnétique, pour générer un champ magnétique dans ledit canal de décharge. Le procédé comprend :
- une étape de détermination de la température en un point thermique de référence du propulseur électrique,
- lorsque la température déterminée est inférieure à une température minimale prédéfinie lors d'une phase d'arrêt du propulseur électrique, une étape de chauffage dudit propulseur électrique par effet joule, via l'application d'un courant dans le circuit magnétique.

Par point thermique de référence, on entend un point ou une zone physique précise au niveau du propulseur électrique où il est possible d'installer une sonde thermique, notamment pendant les essais de caractérisation et/ou qualification au sol, et dont la température fournit une image fiable du comportement thermique interne du propulseur électrique.

Le point thermique de référence peut être situé au sein du propulseur électrique ou sur une zone d'une surface extérieure du propulseur électrique.

Quand ce point thermique de référence est situé à une interface entre le propulseur électrique et une structure de support du propulseur électrique, la connaissance de sa température permet aussi de caractériser les flux thermiques échangés entre le propulseur électrique et sa structure de support, pendant des essais au sol ou en vol. Dans ce cas, la maîtrise de la température de ce point thermique de référence suffit ainsi à garantir, d'un point de vue thermique, à la fois le bon fonctionnement du propulseur électrique et des zones du satellite en interface avec celui-ci.

Lors de l'étape de chauffage, le courant appliqué est préférentiellement d'intensité inférieure à l'intensité du courant appliqué au circuit magnétique et nécessaire pour permettre la génération de l'effet propulsif du propulseur électrique.

Après un tel procédé, la régulation en température du propulseur électrique est réalisée au moyen d'un élément interne au propulseur, à savoir le circuit magnétique.

Il s'avère ainsi possible de réguler thermiquement ledit propulseur électrique de manière optimale, sans nécessiter l'ajout d'équipements de réchauffage externes.

Le procédé selon l'invention est avantageusement mis en œuvre dans tout type de propulseur électrique utilisant un bobinage magnétique pour générer l'effet propulsif, notamment les propulseurs à effet Hall.

Dans des modes particuliers de mise en œuvre, le procédé peut comporter en outre l'une ou plusieurs des caractéristiques suivantes, prises isolément ou selon toutes les combinaisons techniquement possibles.

Dans des modes de mise en œuvre préférés, lors d'une phase de fonctionnement du propulseur électrique, lorsque la température déterminée est supérieure à une température maximale prédéfinie, le propulseur est arrêté temporairement pour permettre son refroidissement.

Dans des modes de mise en œuvre préférés, l'étape de détermination de la température, qu'elle soit réalisée au sein ou sur une zone de la surface extérieure du propulseur électrique, et comporte :
- une sous-étape d'application d'un courant dans le circuit magnétique,
- une sous-étape de détermination de paramètres électriques du propulseur électrique, comprenant une sous-étape de mesure de la tension dans le circuit magnétique et une sous-étape de détermination de l'intensité du courant circulant dans le circuit magnétique,
- une sous-étape de détermination de la température en fonction des paramètres électriques déterminés, au moyen d'un modèle préétabli.

Il est entendu par modèle préétabli au sens de l'invention, tout graphique, toute table ou toute équation permettant de déduire des paramètres électriques (intensité, tension) la température du point thermique de référence.

Un tel modèle préétabli peut ainsi se présenter sous différentes formes, telles que par exemple, et de manière non limitative, une table de correspondance, une base de données, un abaque, un modèle numérique, un modèle analytique, une fonction numérique tabulée, une fonction analytique, un modèle semi-analytique ou semi-numérique.

Le modèle préétabli permet de lier de manière biunivoque les paramètres électriques (intensité, tension) à la température au sein d'un propulseur électrique.

Dans un exemple de mise en œuvre, une table de correspondance liant d'une part des valeurs de rapports entre la tension et l'intensité de courant et d'autre part la température correspondante au point thermique de référence est utilisée.

L'application du courant dans le circuit magnétique est réalisée au moyen d'une unité d'alimentation électrique du propulseur électrique, dite PPU (de l'anglo-saxon « Power Processing Unit »), par exemple via une source de courant, au travers d'un câblage électrique.

La mesure de la tension peut s'effectuer par exemple soit aux bornes du au moins un bobinage magnétique, soit de manière déportée, au niveau de l'unité d'alimentation électrique du propulseur électrique.

Dans un mode de mise en œuvre de détermination du courant circulant dans le circuit magnétique, l'intensité du courant est mesurée. Cette mesure peut s'effectuer par exemple soit aux bornes du au moins un bobinage magnétique, soit de manière déportée, au niveau de l'unité d'alimentation électrique du propulseur électrique.

Dans un autre mode de mise en œuvre de détermination du courant circulant dans le circuit magnétique, on utilise la valeur de l'intensité du courant appliqué par la source de courant, éventuellement recalée par un modèle numérique, suivant la précision de la commande du courant. Il s'agit en d'autres termes d'une simple lecture de la valeur de régulation en courant.

Le procédé propose ainsi de faire circuler un courant dans un élément non dédié à la mesure thermique en tant que telle.

La température au point thermique de référence du propulseur électrique est ainsi obtenue à partir de mesures électriques du circuit magnétique, qui est initialement présent dans le propulseur électrique, notamment pour générer un champ magnétique en vue de permettre la génération de l'effet propulsif dans le propulseur électrique.

De manière tout à fait avantageuse, aucun élément externe au propulseur électrique, du type thermistance ou thermocouple, n'est donc nécessaire pour déterminer la température au point thermique de référence dudit propulseur électrique.

Ainsi, l'étape de détermination de la température du propulseur électrique est réalisable de façon générique pour tous types d'architectures de câblages électriques entre ledit propulseur électrique et l'unité d'alimentation électrique le connectant au satellite.

Le modèle préétabli, permettant de lier les paramètres électriques et la température au point thermique de référence du propulseur électrique, a été préalablement déterminé, notamment suivant le type de propulseur électrique.

Le modèle préétabli permet de s'affranchir de façon simple et efficace d'un certain nombre d'incertitudes sur les éléments mis en jeu au sein et autour du propulseur électrique. Il est ainsi envisageable d'installer des propulseurs électriques de types différents, avec des architectures différentes, sur un même satellite et conserver le même procédé de détermination de la température, tout en utilisant pour chaque type de propulseur un modèle préétabli spécifique.

En variante, le modèle préalablement établi peut intégrer l'impact de l'architecture du câblage électrique entre ledit propulseur électrique et l'unité d'alimentation électrique le connectant au satellite.

L'étape de détermination de la température au point thermique de référence du propulseur, lorsque ledit point est au sein du propulseur, permet ainsi avantageusement la détermination précise, et notamment à distance du propulseur électrique lorsque les mesures de tension et d'intensité de courant sont déportées au niveau de la PPU, de la température dans le cœur du propulseur électrique, que ce soit pendant la phase de fonctionnement du propulseur électrique, où la température très chaude du propulseur électrique est contrôlée afin qu'elle n'excède pas la température maximale préconisée pour le bon fonctionnement du propulseur électrique, ou pendant la phase d'arrêt du propulseur électrique, où la température est contrôlée afin qu'elle ne descende pas en dessous d'une température minimale prédéfinie.

Dans des modes particuliers de mise en œuvre, la sous-étape de détermination de la température comporte une sous-étape de calcul de la résistance électrique du au moins un bobinage magnétique à partir des valeurs de tension mesurée et d'intensité de courant déterminée. Le modèle préétabli permet d'associer, à la valeur de la résistance électrique calculée, la valeur de température correspondante.

Le au moins un bobinage magnétique étant formé d'un fil conducteur enroulé, dont la résistance varie en fonction de la température, le procédé utilise avantageusement cette caractéristique pour déterminer la température au point thermique de référence du propulseur électrique.

Dans des modes particuliers de mise en œuvre, la sous-étape de détermination de la température comporte une sous-étape de calcul de la résistivité électrique du matériau constituant le circuit magnétique à partir des valeurs de tension mesurée et d'intensité de courant déterminée. Le modèle permet d'associer, à la valeur de la résistivité électrique calculée, la valeur de température correspondante.

Dans des modes particuliers de mise en œuvre, lorsque le propulseur électrique est en fonctionnement, le courant appliqué pour déterminer la température est celui appliqué au circuit magnétique et adapté à permettre la génération de l'effet propulsif du propulseur électrique.

Dans des modes particuliers de mise en œuvre, lorsque le propulseur électrique est en mode arrêt, le courant appliqué pour déterminer la température est fixe ou variable. Il peut par exemple être d'intensité inférieure à l'intensité du courant appliqué au circuit magnétique et adapté à permettre la génération de l'effet propulsif du propulseur électrique.

Dans un exemple de mise en œuvre, le courant appliqué dans le circuit magnétique est réalisé au moyen d'une source de courant distincte de la source de courant utilisée pour générer le champ magnétique.

Dans un exemple préféré de mise en œuvre, le courant appliqué dans au moins un bobinage magnétique est réalisé au moyen de la source de courant utilisée pour générer le champ magnétique. Un niveau d'intensité plus faible du courant peut être appliqué pour limiter la consommation en énergie.

Un tel mode de mise en œuvre illustre que le procédé peut être avantageusement utilisé en dehors de la plage de fonctionnement du propulseur électrique.

Dans des modes particuliers de mise en œuvre, l'étape de détermination de la température peut être réalisée par tout moyen, tel que par exemple un équipement de mesure de la température, de type thermistance ou thermocouple.

Dans des exemples de mise en œuvre, la détermination de la température est réalisée au niveau d'un point thermique de référence situé sur une zone de la surface extérieure du propulseur électrique. La mesure peut ainsi être réalisée par tout moyen, notamment un équipement de mesure de la température, de type thermistance ou thermocouple.

### Présentation des figures

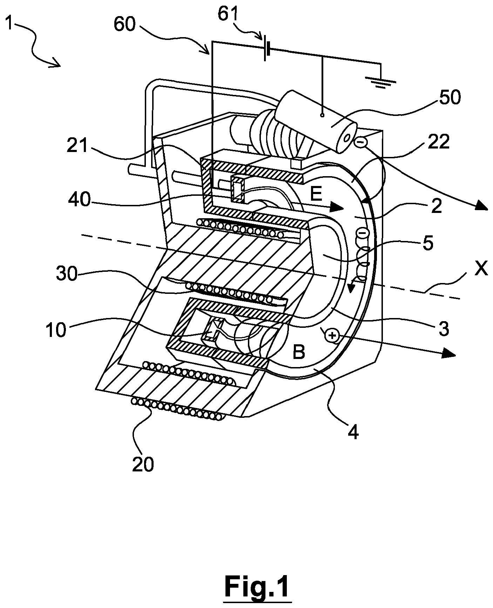

L'invention sera mieux comprise à la lecture de la description ci-après, donnée à titre d'exemple nullement limitatif, et faite en se référant à l'unique figure qui représente une vue en coupe partielle et en perspective d'un propulseur à effet Hall selon l'invention, illustrant sa structure générale.

Pour des raisons de clarté, les éléments représentés ne sont pas à l'échelle, sauf mention contraires.

### Description détaillée d'un mode de réalisation de l'invention

La présente invention concerne la régulation de température au sein d'un propulseur électrique.

Le propulseur électrique est prévu pour équiper un satellite destiné à être mis à poste, pour les besoins de sa mission, par exemple sur une orbite GEO ou une orbite terrestre basse (« Low Earth Orbit » ou LEO).

Dans la suite de la description, on se place de manière non limitative dans le cas d'un propulseur à effet Hall. Rien n'exclut cependant de considérer d'autres propulseurs électriques, dès lors qu'ils comportent un circuit magnétique, comme par exemple des propulseurs MagnétoPlasmaDynamiques (MPD), des propulseurs plasmatiques multi-étages à haute efficacité (HEMP de l'acronyme anglais « High Efficiency Multistage Plasma ») ou des propulseurs Helicon. Le propulseur à effet Hall, dit propulseur 1, représenté en perspective et en coupe partielle sur l'unique figure, est classique en lui-même.

Le propulseur 1 comporte un canal annulaire, dit canal de décharge 2, délimité par une paroi interne 3 et une paroi externe 4, concentriques autour d'un axe central X. La paroi interne 3 délimite un noyau central 5.

Le terme « interne » désigne une partie plus proche de l'axe central X, le terme « externe » une partie plus éloignée de l'axe central X.

Les parois interne 3 et externe 4 sont préférentiellement en matière céramique.

Le canal de décharge 2 présente une extrémité aval 22 ouverte et une extrémité amont 21 fermée.

Le canal de décharge 2 présente aussi, à son extrémité amont 21, un système d'injection 10 de gaz propulsif dans le canal de décharge 2.

Le gaz propulsif peut être du xénon, qui présente les avantages d'un poids moléculaire élevé et un potentiel d'ionisation comparativement bas.

Les termes « amont » et « aval », dans le présent contexte, sont définis par rapport au sens de circulation normal du gaz propulsif dans la direction définie par l'axe central X du canal de décharge.

Le propulseur 1 comporte aussi un circuit magnétique. Ce circuit magnétique comprend :
- un premier bobinage magnétique, dit bobinage magnétique périphérique 20, disposé autour de la paroi externe 4,
- un second bobinage magnétique, dit bobinage magnétique central 30, disposé de manière concentrique dans le noyau central 5, à proximité de la paroi interne 3.

Le bobinage magnétique central 30 et le bobinage magnétique périphérique 20 sont destinés à générer un champ magnétique radial dans le canal de décharge 2, dont l'intensité est maximale vers l'extrémité aval 22 dudit canal de décharge.

Chaque bobinage magnétique, central 30 et périphérique 20, est réalisé à partir d'un enroulement de fil conducteur.

Les propulseurs à double bobinages magnétiques (périphérique et central) forment la configuration la plus typique.

Dans une forme de réalisation, les deux bobinages magnétiques, central 30 et périphérique 20, sont reliés en série.

Dans une variante de réalisation, les deux bobinages magnétiques, central 30 et périphérique 20, ne sont pas reliés entre eux.

Dans un autre mode de réalisation du circuit magnétique, ledit circuit magnétique comporte un seul bobinage magnétique, par exemple le bobinage magnétique central.

Le propulseur 1 comporte un circuit électrique 60 comprenant une anode 40 située à l'extrémité amont 21 du canal de décharge 2, une cathode 50 située en aval de l'extrémité aval 22 ouverte du canal de décharge 2, et une source de tension électrique 61 entre l'anode 40 et la cathode 50.

La source de tension électrique est disposée dans une unité d'alimentation électrique, dite PPU, classique en elle-même.

La PPU alimente en outre en courant le circuit magnétique, de préférence un courant d'intensité continue. Un câblage électrique relie la PPU au circuit magnétique.

Dans le cas où les deux bobinages magnétiques, central 30 et périphérique 20, ne sont pas reliés entre eux, un courant différent alimente chaque bobinage magnétique. La PPU alimente en courant le circuit magnétique, via deux sources de courant distinctes (non représentées).

Dans le cas le plus fréquent où les deux bobinages magnétiques, central 30 et périphérique 20, sont reliés en série, un même courant est utilisé. La PPU alimente en courant le circuit magnétique, via une source de courant unique (non représentée).

Dans une première architecture, la source de courant alimentant le circuit magnétique est commune avec celle alimentant l'anode 40.

Dans une seconde architecture, la source de courant alimentant le circuit magnétique est distincte de celle alimentant l'anode 40.

La sélectivité dans le choix du courant fourni est fonction de la phase d'utilisation du propulseur 1. Ainsi, lorsque le propulseur 1 est en fonctionnement, le circuit magnétique et l'anode 40 sont tous les deux alimentés, tandis que lorsque le propulseur 1 est arrêté, seul le circuit magnétique est alimenté. En fonction de l'architecture choisie, cette sélectivité dans le choix du courant fourni est possible à l'aide de moyens connus de l'homme du métier tels que, par exemple, un commutateur dans le cas de la première architecture, et un circuit de contrôle des deux sources de courant dans le cas de la seconde architecture.

En fonctionnement, une tension électrique est établie entre la cathode 50 et l'anode 40. La cathode 50 commence alors à émettre des électrons au voisinage de l'extrémité aval 22 du canal de décharge 2. Ces électrons se dirigent, dans le canal de décharge, vers le système d'injection 10 sous l'influence du champ électrique généré par la différence de potentiel entre la cathode 50 et l'anode 40, et se retrouvent en grande partie piégés par le champ magnétique B au voisinage de l'extrémité aval 22 du canal de décharge 2.

Les électrons sont ainsi amenés à décrire des trajectoires circonférentielles dans le canal de décharge 2, au niveau de son extrémité aval 22 ouverte. Du gaz propulsif est injecté dans le canal de décharge 2 à travers le système d'injection 10. Ces électrons ionisent alors via des chocs les atomes de gaz propulsif circulant de l'amont vers l'aval dans le canal de décharge 2, créant ainsi des ions. De plus, ces électrons créent un champ électrique E axial, qui accélère ces ions depuis l'anode 40 vers l'extrémité aval 22, de telle sorte que ces ions sont éjectés à grande vitesse du canal de décharge 2 par son extrémité aval, ce qui engendre une poussée sensiblement alignée avec l'axe central X.

Pour réguler le propulseur en température selon le procédé objet de l'invention, dans une première étape, la température en un point thermique de référence du propulseur est déterminée.

Dans un premier exemple de mise en œuvre de cette première étape, la détermination de la température est réalisée au niveau d'un point thermique de référence situé sur une zone d'une surface extérieure du propulseur, notamment sur un côté d'une surface extérieure de la structure du propulseur. Le point thermique de référence peut être situé par exemple à l'arrière du propulseur, ou sur un coté du propulseur, ou au niveau d'une structure de support faisant interface entre le propulseur et la structure du satellite ou un mécanisme de déploiement du propulseur.

La détermination de la température au point thermique de référence, lorsque ledit point thermique est situé au niveau d'une interface avec le satellite permet avantageusement d'obtenir des informations au niveau à la fois du propulseur, pour déterminer si celui-ci est trop chaud ou trop froid, et du satellite, pour éviter d'endommager celui-ci au contact d'un propulseur qui pourrait être trop chaud.

Dans un deuxième exemple de mise en œuvre de la première étape, la détermination de la température est réalisée au niveau d'un point de référence situé à l'intérieur du propulseur. En d'autres termes, la température est déterminée au sein du propulseur.

Ce deuxième exemple de mise en œuvre, comparé au premier exemple de mise en œuvre, permet une détermination plus précise de la température du propulseur.

Pour déterminer la température au point thermique de référence, qu'il soit au sein ou sur une zone de la surface extérieure du propulseur, un courant est tout d'abord appliqué dans le circuit magnétique du propulseur.

Dans le cas où les deux bobinages magnétiques, central 30 et périphérique 20, ne sont pas reliés entre eux, un premier courant constant, d'intensité déterminée, est appliqué aux bornes du bobinage magnétique central 30, via une première source de courant, et un second courant constant, d'intensité déterminée identique ou différente de celle du premier courant, est appliqué aux bornes du bobinage magnétique périphérique 2, via une seconde source de courant.

Dans le cas où les deux bobinages magnétiques, central 30 et périphérique 20, sont reliés en série, un courant unique constant, d'intensité déterminée, est appliqué et alimente les bobinages magnétiques central 30 et périphérique 20, via une source de courant située dans la PPU.

Dans un exemple de mise en œuvre, lorsque le propulseur 1 est en fonctionnement, on tire avantage du courant existant circulant dans le circuit magnétique en vue de générer le champ magnétique adapté à permettre la génération de l'effet propulsif. Il peut s'agir soit du courant circulant dans le bobinage magnétique central 30, soit celui circulant dans le bobinage magnétique périphérique 20, soit celui circulant dans les deux bobinages magnétiques central et périphérique. Le courant circulant dans le circuit magnétique prend typiquement les valeurs suivantes : pour des propulseurs électriques demandant une puissance électrique de décharge comprise entre 100 Watts et 500 Watts, l'intensité du courant est comprise entre 1A et 2A, et pour des propulseurs électriques nécessitant une puissance électrique de décharge supérieure, c'est-à-dire comprise entre 1,5 kWatts et 5 kWatts, l'intensité du courant est typiquement compris entre 4A et 10A.

Dans un autre exemple de mise en œuvre, lorsque le propulseur 1 est arrêté, on injecte spécifiquement un courant dans le circuit magnétique. Plus particulièrement, on injecte un courant soit dans le bobinage magnétique central 30, soit dans le bobinage magnétique périphérique 20, soit dans les deux bobinages magnétiques central et périphérique. Le courant injecté présente une intensité maximale très inférieure à l'intensité du courant adapté à permettre la génération de l'effet propulsif. Le courant injecté circulant dans le circuit magnétique, dans le cas où les deux bobinages magnétiques, central 30 et périphérique 20, sont reliés en série, est typiquement de l'ordre de 1% à 10% du courant adapté à permettre la génération de l'effet propulsif. La valeur du courant dépend par exemple du contexte thermique de la mission, le design du moteur et l'interface avec le satellite.

Le courant peut être appliqué continûment ou par intermittence, suivant le besoin.

Une fois que le courant est appliqué dans le circuit magnétique, soit dans le bobinage magnétique central 30, soit dans le bobinage magnétique périphérique 20, soit dans les deux bobinages magnétiques central 30 et périphérique 20, des paramètres électriques du propulseur électrique sont déterminés.

De préférence, les paramètres électriques du propulseur électrique à déterminer sont la tension dans le circuit magnétique et l'intensité du courant circulant dans le circuit magnétique.

Dans un mode de mise en œuvre, la valeur de la tension dans le circuit magnétique est mesurée.

Dans un mode de mise en œuvre, connaissant l'intensité du courant appliquée par la source de courant, on peut choisir d'utiliser cette valeur d'intensité de courant, notamment lorsque la régulation de la source de courant est considérée suffisamment précise. Eventuellement, en cas d'une imprécision de la source de courant, on peut avoir recours, suite à des tests ou à des informations du constructeur, à un modèle de calibration permettant de recaler les valeurs d'intensité de courant et ainsi d'estimer plus précisément la valeur de l'intensité de courant effectivement appliquée, sans nécessiter de la mesurer.

Dans une variante préférée de mise en œuvre, la valeur de l'intensité du courant circulant dans le circuit magnétique est mesurée, indépendamment de la valeur de l'intensité du courant appliqué par la source de courant. Cette mesure permet de s'affranchir notamment des imperfections ou instabilités de la source de courant et d'obtenir une valeur précise de la valeur de l'intensité du courant circulant dans le circuit magnétique. En outre, cette prise de mesure est d'autant plus simple d'utilisation avec des sources de courant comportant plusieurs points de fonctionnement comme il est utilisé pour faire de la montée d'orbite en tout électrique.

Dans un exemple de mise en œuvre, la tension est mesurée.

Dans un exemple de mise en œuvre, les mesures des paramètres électriques du propulseur, tension et intensité de courant, sont effectuées préférentiellement au niveau de l'unité d'alimentation électrique du propulseur électrique.

En variante, les mesures des paramètres électriques du propulseur, tension et intensité de courant, sont effectuées aux bornes d'au moins un bobinage magnétique.

Une fois les paramètres électriques obtenus, la température au point thermique de référence du propulseur électrique est déterminée, au moyen d'un modèle préétabli.

Le modèle prend en entrée la valeur des tension et intensité de courant mesurées et fournit en sortie la température au point thermique de référence, qu'il soit au sein ou sur une zone de la surface extérieure du propulseur électrique.

Dans un mode de mise en œuvre, la résistance électrique d'au moins un bobinage magnétique est calculée.

Par exemple, on calcule la résistance électrique associée à ce couple de valeurs tension et intensité de courant, en utilisant la loi d'Ohm. Puis, à l'aide d'un modèle préétabli, on associe à la valeur de la résistance électrique calculée, la température correspondante.

Dans cet exemple, le modèle préétabli prend en entrée la valeur calculée de la résistance électrique et fournit en sortie la température au point thermique de référence, qu'il soit au sein ou sur une zone de la surface extérieure du propulseur électrique.

Lorsque la valeur calculée de la résistance électrique n'est pas présente dans le modèle, une interpolation entre deux valeurs entourant la valeur calculée de résistance permet de retrouver la valeur de la température. Plus le pas entre deux valeurs successives est petit, plus les interpolations seront précises.

Dans un autre mode de mise en œuvre, la résistivité électrique du matériau constituant le circuit magnétique est calculée.

La résistivité électrique est déduite des mesures de tension dans le circuit magnétique, aux bornes du bobinage magnétique central 30 et/ou du bobinage magnétique périphérique 20, et du courant le(s) traversant ainsi que des valeurs de la section des bobines, de leur longueur, de l'architecture interne du propulseur électrique. A partir de la mesure de cette résistivité électrique, et connaissant la nature du matériau constituant le circuit magnétique, la température en est ensuite déduite et en conséquence la température au point thermique de référence, qu'il soit au sein ou sur une zone de la surface extérieure du propulseur.

Dans ce mode, le modèle préétabli prend en entrée la valeur calculée de la résistivité électrique et fournit en sortie la température au point thermique de référence du propulseur électrique.

Quelque soit les données d'entrée du modèle préétabli (tension, courant, résistance, résistivité), le modèle est défini au préalable au sol par l'intermédiaire d'une série de mesures pour chaque type de propulseur électrique.

Dans un exemple de mise en œuvre, le propulseur électrique est chauffé. Simultanément, d'une part sa température est mesurée à l'aide de capteurs de température disposés au point thermique de référence, qu'il soit au sein ou sur une zone de la surface extérieure du propulseur électrique, et d'autre part la tension et l'intensité du courant dans le circuit magnétique sont mesurées.

Dans l'exemple de réalisation d'un modèle résistance-température, la résistance électrique associée est calculée, par exemple en utilisant la loi d'Ohm. Pour chaque point de température mesurée, on lui fait correspondre dans le modèle, la valeur de la résistance mesurée.

Le profil de variation de la résistance électrique en fonction de la température peut ne pas être linéaire sur toute la plage de valeurs de résistance. Par conséquent, pour maximiser la précision de la détermination de la température tout en limitant le nombre total de valeurs dans le modèle, il est possible de constituer un modèle avec un pas variable : plus la pente de la courbe résistance-température est élevée, plus le pas sera faible et plus la pente de la courbe résistance-température est faible plus le pas sera grand.

Le modèle peut avoir été préchargé à bord du satellite avant son lancement.

Il est également envisageable que le modèle soit consigné au sol et est interrogeable à distance par le satellite. Le satellite peut ainsi envoyer à une station sol, soit le couple de valeurs de tension et courant mesuré, soit la valeur de la résistance électrique calculée et attendre en réponse la valeur de la température correspondante. De ce fait, il serait possible de consigner au sol un très grand nombre de valeurs dans la table et d'économiser de la mémoire à bord du satellite. Il est aussi possible à postériori, une fois que le satellite a été lancé, de refaire des mesures au sol sur certaines plages de fonctionnement et ainsi d'affiner à postériori la mesure de la température.

Les températures mesurées peuvent être très différentes en fonction des phases de fonctionnement du propulseur (en fonctionnement, à l'arrêt). En variante, il est possible de constituer plusieurs modèles, un par phase de fonctionnement du propulseur.

Une intégration temporelle de plusieurs estimations de température peut également permettre de déterminer le sens de variation de la température du propulseur électrique. Si un effet d'hystérésis est noté en fonction de la croissance ou de la décroissance de la température, il sera ainsi possible à tout moment de savoir quelle portion du modèle choisir.

Il est à noter qu'en orbite la température des lignes électriques, reliant le propulseur électrique et le lieu de la mesure, va varier. Cette variation de température des lignes entraîne des variations de leur résistance et introduit donc une perturbation dans l'estimation de la température du propulseur. Ce phénomène peut par exemple être simplement corrigé par une estimation ou une mesure de la température environnante de ces lignes électriques.

La connaissance de la température au point thermique de référence du propulseur, que ce soit au sein ou sur une zone de la surface extérieure du propulseur, permet ainsi un suivi fiable du comportement thermique du propulseur électrique. Il s'avère ensuite possible de réguler thermiquement ledit propulseur électrique de manière optimale, sans nécessiter l'ajout d'équipements de mesure, du type thermistances ou thermocouples, et leurs systèmes d'acquisition associés.

Lors d'une phase de fonctionnement du propulseur, le contrôle de la température au point thermique de référence du propulseur, que ce soit au sein ou sur une zone de la surface extérieure du propulseur permet de s'assurer que celle-ci ne dépasse pas la température maximale prescrite.

Dans le cas où la température déterminée excède la température maximale prescrite, le propulseur peut être arrêté temporairement.

Lors d'une phase d'arrêt du propulseur, le contrôle de la température au point thermique de référence du propulseur, que ce soit au sein ou sur une zone de la surface extérieure du propulseur, permet de s'assurer que celle-ci ne descend pas en dessous d'une température minimale prescrite.

Dans le cas où la température déterminée est inférieure à la température minimale prescrite, un réchauffage du propulseur est réalisé.

Dans un exemple de mise en œuvre, le réchauffage est produit par effet joule. Un tel réchauffage peut consister en l'application d'un courant dans le circuit magnétique. Le courant appliqué présente de préférence une intensité maximale inférieure à l'intensité du courant adapté à permettre la génération de l'effet propulsif.

Ainsi, il n'est plus nécessaire de recourir à un réchauffeur avec son système d'alimentation associé classiquement utilisés pour le réchauffage des propulseurs spatiaux.

L'intégration temporelle de plusieurs estimations de température permet de déterminer le sens de variation de la température du propulseur mais également de suivre sa vitesse d'évolution dans le temps. En connaissant l'inertie thermique du propulseur (par des mesures préalables au sol) il est ainsi possible d'anticiper en orbite le démarrage d'un réchauffage ou l'arrêt du propulseur pour éviter une surchauffe.

L'invention trouve une application particulièrement avantageuse dans plusieurs modes de contrôle thermique de la propulsion : soit guidé par le sol, soit en mode autonome dans lequel le satellite prend ses décisions par rapport à des seuils ou un plan préétablis, indépendamment du sol, soit dans un mode hybride combinant les deux modes ci-dessus et dans lequel le satellite possède une part d'autonomie mais aussi des interactions avec le sol. Les actions typiques comprises dans ces modes ont été décrits précédemment et comprennent notamment les commandes de courant, le démarrage d'un réchauffage, le démarrage ou l'arrêt d'un propulseur, le contrôle de la température du ou des propulseurs.

La description ci-avant illustre clairement que par ses différentes caractéristiques et leurs avantages, la présente invention atteint les objectifs qu'elle s'était fixés. En particulier, elle propose un procédé simple et fiable permettant la régulation précise de la température au sein ou sur une zone de la surface extérieure d'un propulseur électrique. Ce procédé présente l'avantage de ne recourir à aucun élément extérieur au couple composé par le propulseur électrique et la PPU. En particulier, l'invention permet de simplifier l'intégration du propulseur dans les véhicules spatiaux en permettant de remplacer les chaînes d'acquisition (des thermistances ou thermocouples) et d'alimentation des équipements de réchauffage, par les chaînes et alimentation déjà présentes dans la PPU. Ceci se traduit par un système moins onéreux, plus compact à installer, plus précis et plus efficace en fonctionnement car très bien intégré au propulseur.

## Revendications

1. Procédé de régulation en température d'un propulseur électrique (1), ledit propulseur électrique comportant un canal de décharge (2), une anode (40), une cathode (50), un système d'injection (10) de gaz propulsif dans le canal de décharge (2), et un circuit magnétique, comportant au moins un bobinage magnétique (20, 30), pour générer un champ magnétique dans ledit canal de décharge, **caractérisé en ce qu'**il comprend :
- une étape de détermination de la température en un point thermique de référence du propulseur électrique (1),
- lorsque la température déterminée est inférieure à une température minimale prédéfinie lors d'une phase d'arrêt du propulseur électrique, une étape de chauffage du propulseur électrique (1) par effet joule, via l'application d'un courant dans le circuit magnétique.

2. Procédé de régulation en température d'un propulseur électrique (1) selon la revendication 1 dans lequel, lors d'une phase de fonctionnement du propulseur électrique (1), lorsque la température déterminée est supérieure à une température maximale prédéfinie, le propulseur électrique est arrêté temporairement.

3. Procédé de régulation en température d'un propulseur électrique (1) selon l'une des revendications 1 ou 2 dans lequel l'étape de détermination de la température comporte :
- une sous-étape d'application d'un courant dans le circuit magnétique,
- une sous-étape de détermination de paramètres électriques du propulseur électrique, comprenant une sous-étape de mesure de la tension dans le circuit magnétique et une sous-étape de détermination de l'intensité du courant circulant dans le circuit magnétique,
- une sous-étape de détermination de la température en fonction des paramètres électriques déterminés, au moyen d'un modèle préétabli.

4. Procédé de régulation en température d'un propulseur électrique (1) selon la revendication 3 dans lequel la sous-étape de détermination du courant comporte une sous-étape de mesure du courant circulant dans le circuit magnétique ou une sous-étape de lecture de la valeur de régulation en courant.

5. Procédé de régulation en température d'un propulseur électrique (1) selon l'une des revendications 3 ou 4 dans lequel la sous-étape de détermination de la température comporte une sous-étape de calcul de la résistance électrique du au moins un bobinage magnétique à partir des valeurs de tension mesurée et de courant déterminé, le modèle faisait correspondre la résistance électrique et la température.

6. Procédé de régulation en température d'un propulseur électrique (1) selon l'une des revendications 3 à 5 dans lequel la sous-étape de détermination de la température comporte une sous-étape de calcul de la résistivité électrique du matériau constituant le circuit magnétique à partir des valeurs de tension mesurée et de courant déterminé, le modèle faisant correspondre la résistivité électrique et la température.

7. Procédé de régulation en température d'un propulseur électrique (1) selon l'une des revendications 3 à 6 dans lequel, lorsque le propulseur électrique est en fonctionnement, le courant appliqué pour déterminer la température est celui appliqué au circuit magnétique et adapté à permettre la génération de l'effet propulsif du propulseur électrique.

8. Procédé de régulation en température d'un propulseur électrique (1) selon l'une des revendications 3 à 6 dans lequel, lorsque le propulseur électrique est en mode arrêté, le courant appliqué pour déterminer la température est constant ou variable.

9. Procédé de régulation en température d'un propulseur électrique (1) selon l'une des revendications précédentes dans lequel la détermination de la température est réalisée au niveau d'un point de référence situé sur une zone d'une surface extérieure du propulseur électrique.

10. Procédé de régulation en température d'un propulseur électrique (1) selon l'une des revendications 1 à 8 dans lequel la détermination de la température est réalisée au sein du propulseur électrique.

## Patentansprüche

1. Verfahren zur Steuerung der Temperatur eines elektrischen Antriebssystems (1), wobei das elektrische Antriebssystem einen Entladungskanal (2), eine Anode (40), eine Kathode (50), ein Einspritzsystem (10) für Treibgas in den Entladungskanal (2) und einen Magnetkreis beinhaltet, der mindestens eine Magnetwicklung (20, 30) beinhaltet, um ein Magnetfeld in dem Entladungskanal zu generieren, **dadurch gekennzeichnet, dass** es Folgendes umfasst:
- einen Schritt zum Bestimmen der Temperatur an einem thermischen Referenzpunkt des elektrischen Antriebssystems (1),
- wenn die bestimmte Temperatur niedriger als eine vordefinierte minimale Temperatur bei einer Haltephase des elektrischen Antriebssystems ist, einen Schritt des Heizens des elektrischen Antriebssystems (1) durch Stromwärme, durch Anlegen eines Stroms in dem Magnetkreis.

2. Verfahren zur Steuerung der Temperatur eines elektrischen Antriebssystems (1) nach Anspruch 1, wobei das elektrische Antriebssystem bei einer Betriebsphase des elektrischen Antriebssystems (1), wenn die bestimmte Temperatur höher als eine vordefinierte maximale Temperatur ist, vorübergehend angehalten ist.

3. Verfahren zur Steuerung der Temperatur eines elektrischen Antriebssystems (1) nach einem der Ansprüche 1 oder 2, wobei der Schritt zum Bestimmen der Temperatur Folgendes beinhaltet:
- ein Unterschritt zum Anlegen eines Stroms in dem Magnetkreis,
- einen Unterschritt zum Bestimmen von elektrischen Parametern des elektrischen Antriebssystems, einen Unterschritt zum Messen der Spannung in dem Magnetkreis, und einen Unterschritt zum Bestimmen der Intensität des Stroms beinhaltend, der in dem Magnetkreis strömt,
- einen Unterschritt zum Bestimmen der Temperatur in Abhängigkeit von den bestimmten elektrischen Parametern anhand eines vorerstellten Modells.

4. Verfahren zur Steuerung der Temperatur eines elektrischen Antriebssystems (1) nach Anspruch 3, wobei der Unterschritt zum Bestimmen des Stroms einen Unterschritt zum Messen des Stroms beinhaltet, der in dem Magnetkreis strömt, oder einen Unterschritt zum Lesen des Stromsteuerungswerts.

5. Verfahren zur Steuerung der Temperatur eines elektrischen Antriebssystems (1) nach einem der Ansprüche 3 oder 4, wobei der Unterschritt zum Bestimmen der Temperatur einen Unterschritt zum Berechnen des elektrischen Widerstands der mindestens einen Magnetwicklung aus den Werten einer gemessenen Spannung und eines bestimmten Stroms, wobei das Modell den elektrischen Widerstand und die Temperatur entsprechen lässt.

6. Verfahren zur Steuerung der Temperatur eines elektrischen Antriebssystems (1) nach einem der Ansprüche 3 bis 5, wobei der Unterschritt zum Bestimmen der Temperatur einen Unterschritt zum Berechnen der elektrischen Resistivität des Materials, das den Magnetkreis bildet, aus den gemessenen Spannungswerten und dem bestimmten Strom beinhaltet, wobei das Modell die elektrische Resistivität und die Temperatur entsprechen lässt

7. Verfahren zur Steuerung der Temperatur eines elektrischen Antriebssystems (1) nach einem der Ansprüche 3 bis 6, wobei, wenn das elektrische Antriebssystem in Betrieb ist, der angelegte Strom zum Bestimmen der Temperatur jener ist, der an den Magnetkreis angelegt wird, und angepasst ist, um das Generieren des Antriebseffekts des elektrischen Antriebssystems zu ermöglichen.

8. Verfahren zur Steuerung der Temperatur eines elektrischen Antriebssystems (1) nach einem der Ansprüche 3 bis 6, wobei, wenn das elektrische Antriebssystem im angehaltenen Modus ist, der angelegte Strom zum Bestimmen der Temperatur konstant oder variabel ist.

9. Verfahren zur Steuerung der Temperatur eines elektrischen Antriebssystems (1) nach einem der vorstehenden Ansprüche, wobei das Bestimmen der Temperatur im Bereich eines Referenzpunktes realisiert wird, der sich in einer Zone einer äußeren Oberfläche des elektrischen Antriebssystems befindet.

10. Verfahren zur Steuerung der Temperatur eines elektrischen Antriebssystems (1) nach einem der Ansprüche 1 bis 8, wobei das Bestimmen der Temperatur innerhalb des elektrischen Antriebssystems realisiert wird.

## Claims

1. Method for controlling the temperature of an electric propulsion system (1), said electric propulsion system having a discharge channel (2), an anode (40), a cathode (50), an injection system (10) for injecting propellant gas in the discharge channel (2), and a magnetic circuit comprising at least one magnetic winding (20, 30) for generating a magnetic field in said discharge channel, **characterised in that** it comprises:
- a step of determining the temperature at a reference thermal point of the electric propulsion system (1),
- when the determined temperature is below a predetermined minimum temperature during a stop phase of the electric propulsion system, a step of heating the electric propulsion system (1) by the Joule effect, through the application of a current in the magnetic circuit.

2. Method for controlling the temperature of an electric propulsion system (1) according to claim 1 wherein, during an operating phase of the electric propulsion system (1), when the determined temperature exceeds a predetermined maximum temperature, the electric propulsion system is temporarily stopped.

3. Method for controlling the temperature of an electric propulsion system (1) according to any one of claims 1 or 2, wherein the step of determining the temperature comprises:
- a sub-step of applying a current in the magnetic circuit,
- a sub-step of determining the electrical parameters of the electric propulsion system, comprising a sub-step of measuring the voltage in the magnetic circuit and a sub-step of determining the intensity of the current flowing in the magnetic circuit,
- a sub-step of determining the temperature based on the determined electrical parameters, by means of a predetermined model.

4. Method for controlling the temperature of an electric propulsion system (1) according to claim 3, wherein the sub-step of determining the current comprises a sub-step of measuring the current flowing in the magnetic circuit or a sub-step of reading the current regulation value.

5. Method for controlling the temperature of an electric propulsion system (1) according to any one of claims 3 or 4, wherein the sub-step of determining the temperature comprises a sub-step of calculating the electrical resistance of the at least one magnetic winding by using the measured voltage value and the determined current value, with the model being used to match the electrical resistance and the temperature.

6. Method for controlling the temperature of an electric propulsion system (1) according to any one of claims 3 to 5, wherein the sub-step of determining the temperature comprises a sub-step of calculating the electrical resistivity of the material used to make the magnetic circuit, by using the measured voltage value and the determined current value, with the model being used to match the electrical resistivity and the temperature.

7. Method for controlling the temperature of an electric propulsion system (1) according to any one of claims 3 to 6 wherein, when the electric propulsion system is in operation, the current applied for determining the temperature is the same as the current applied to the magnetic circuit and adjusted to enable the generation of the propulsion effect of the electric propulsion system.

8. Method for controlling the temperature of an electric propulsion system (1) according to any one of claims 3 to 6 wherein, when the electric propulsion system is in the stop phase, the current applied to determine the temperature is constant or variable.

9. Method for controlling the temperature of an electric propulsion system (1) according to any one of the preceding claims, wherein the temperature is determined at a reference point located on an area of an outer surface of the electric propulsion system.

10. Method for controlling the temperature of an electric propulsion system (1) according to any one of claims 1 to 8, wherein the temperature is determined inside the electric propulsion system.
